(19)

**Europäisches Patentamt**
**European Patent Office**
**Office européen des brevets**

(11) **EP 4 116 172 B1**

(12) **EUROPEAN PATENT SPECIFICATION**

(45) Date of publication and mention
of the grant of the patent:
**26.02.2025  Bulletin 2025/09**

(21) Application number: **22181555.8**

(22) Date of filing: **28.06.2022**

(51) International Patent Classification (IPC):
**B62D 5/00** (2006.01)    **B62D 5/04** (2006.01)

(52) Cooperative Patent Classification (CPC):
**B62D 5/001; B62D 5/046; B62D 5/0481;**
**B62D 5/0496;** B62D 5/04; B62D 5/0403

(54) **STEER-BY-WIRE STEERING SYSTEM**

STEER-BY-WIRE-LENKVORRICHTUNG

SYSTÈME DE DIRECTION À COMMANDE ÉLECTRIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **05.07.2021  JP 2021111495**

(43) Date of publication of application:
**11.01.2023  Bulletin 2023/02**

(73) Proprietors:
• **TOYOTA JIDOSHA KABUSHIKI KAISHA**
  **Toyota-shi, Aichi-ken, 471-8571 (JP)**
• **JTEKT CORPORATION**
  **Aichi-ken, 448-8652 (JP)**
• **DENSO CORPORATION**
  **Kariya-city, Aichi-pref., 448-8661 (JP)**

(72) Inventors:
• **YAMASHITA, Masaharu**
  **Toyota-shi, Aichi-ken, 471-8571 (JP)**
• **OKUDA, Masataka**
  **Toyota-shi, Aichi-ken, 471-8571 (JP)**

• **YAMASHITA, Yosuke**
  **Toyota-shi, Aichi-ken, 471-8571 (JP)**
• **FUJITA, Yuji**
  **Kariya-shi, Aichi-ken, 448-8652 (JP)**
• **KAJISAWA, Yuuta**
  **Kariya-shi, Aichi-ken, 448-8652 (JP)**
• **ABE, Kenichi**
  **Kariya-shi, Aichi-ken, 448-8652 (JP)**
• **NAKAJIMA, Nobuyori**
  **Kariya-city, Aichi-pref., 448-8661 (JP)**
• **TOMIZAWA, Hiroki**
  **Kariya-city, Aichi-pref., 448-8661 (JP)**
• **IWANA, Takeshi**
  **Kariya-city, Aichi-pref., 448-8661 (JP)**

(74) Representative: **Winter, Brandl - Partnerschaft**
**mbB**
**Alois-Steinecker-Straße 22**
**85354 Freising (DE)**

(56) References cited:
**WO-A1-2019/219329    US-A1- 2020 247 462**

**Description**

BACKGROUND

Technical Field

The following disclosure relates to a steer-by-wire steering system for vehicles.

Description of Related Art

An electric power steering system disclosed in Patent Document 1 (Japanese Patent Application Publication No. 2018-130007) is configured such that an operation force applied by a driver to a steering wheel is assisted by a dual-system assist device, so as to steer a wheel. In case of a failure of one of the two systems of the assist device, the steering wheel is assisted by only the other of the two systems.

Document WO 2019/219329 A1 relates to a method of controlling an electric power assisted steering (EPS) system comprising the steps: During a first mode of operation of the EPS system driving a motor using two inverter bridges simultaneously, the nominal current that is applied to the motor at any time by each bridge being limited to a first value, and during a fault mode of operation driving the motor using only one of the two inverter bridges whereby the nominal current that is applied to the motor at any time in the fault mode is limited to a second value, the method varying the second value as a function of one or more operating parameters of the EPS system whereby the second value is set higher than the first value when it is deemed safe to do so.

SUMMARY

Steering systems installed on vehicles include not only the power steering system described above but also a steering system that includes a steering device including an electric motor and configured to steer a wheel without depending on the operation force applied by the driver to an operating member such as the steering wheel, i.e., a steer-by-wire steering system. It has been proposed to provide the steer-by-wire steering system with a dual-system steering device from the viewpoint of failsafe, for instance. In the steer-by-wire steering system, the operation force of the driver does not contribute to steering of the wheel. Thus, in a case where the wheel is steered by only one of the two systems of the steering device, there may be a possibility that the steering force for steering the wheel is insufficient. Elimination or mitigation of the shortage of the steering force enhances the utility of the steer-by-wire steering system. Accordingly, an aspect of the present disclosure is directed to a steer-by-wire steering system having high utility.

In one aspect of the present invention as claimed in the accompanying claims, a steer-by-wire steering system for a vehicle includes:

an operating member operable by a driver;
a dual-system steering device including two systems each of which includes an electric motor as a drive source, the steering device being configured to steer a wheel; and
a controller configured to control a current to be supplied to each of the electric motors of the respective two systems so as to cause the steering device to steer the wheel in accordance with an operation of the operating member,
wherein the controller is configured to prohibit the current greater than an upper limit value from being supplied to the electric motors of the respective two systems, and

wherein, when the wheel is steered by only one of the two systems, the controller raises the upper limit value of the current to be supplied to the electric motor of the one of the two systems.

For protecting the electric motor or the drive circuit (driver) for the electric motor from overheating, an upper limit value is typically set for the supply current to the electric motor. The steering system according to the present disclosure is configured such that, when one of the two systems of the steering device fails to operate and the wheel is steered by only the other system, the upper limit value of the supply current to be supplied to the electric motor in the other system is raised, so that the steering force is sufficiently obtained. The electric motors or the drive circuits for the electric motors in the dual-system steering device are typically provided with a heat sink common to the two systems for overheating protection. When the upper limit value of the supply current is raised and the wheel is steered by only the other system, the heat sink can be utilized dedicatedly for the other system. Thus, overheating of the electric motor and the drive circuit for the electric motor in the other system is not so problematic. In this respect, it is hard to imagine that steering of the wheel by only the other system continues for a relatively long length of time in such a failure condition in which one of the two systems fails to operate. Thus, even if the upper limit value of the supply current to be supplied to the electric motor in the other system is raised when the wheel is steered by only the other system, overheating of the electric motor and the drive circuit for the electric motor in the other system is not so problematic.

VARIOUS FORMS

The steering device of the steering system according to the present disclosure includes the two systems. Such a dual-system steering device may be configured to include two motors that are separate from each other so as to correspond to the respective two systems or may be configured to include one dual-system electric motor including two systems that correspond to the respective two systems of the steering device. Specifically, the steering device may employ one electric motor having one output shaft and two sets of coils corresponding to the respective two systems of the steering device.

When the temperature of the steering system is lowered to a certain level, a resistance to an operation of a mechanical structural portion increases due to a decrease in clearances in the mechanical structural portion, an increase in the viscosity of the lubricant, etc., thus requiring a larger steering force for steering the wheel. In other words, it is needed to supply a greater amount of current to the electric motor of the steering device. In view of this, the amount of raising of the upper limit value of the supply current, i.e., the increase amount of the upper limit value of the supply current, may be made larger when the temperature of the steering system is not higher than a set temperature than when the temperature of the steering system is higher than the set temperature. Conversely, in a situation in which the temperature of the steering system is not lower than a certain level, the required steering force need not be so large. Accordingly, the upper limit value of the supply current may be raised on condition that the temperature of the steering system is not higher than the set temperature. In other words, the steering system may be configured such that the upper limit value of the supply current is not raised as long as the temperature of the steering system is higher than the set temperature.

The temperature of the steering system may be identified based on detection by a temperature sensor provided for the steering device itself, specifically, a temperature sensor provided on a housing of an actuator, in the vicinity of the electric motor, or in the vicinity of the drive circuit, for instance. The temperature of the steering system may be a temperature of the environment in which the vehicle is placed or a temperature estimated based on a supply history of the current to the electric motor (such as the amount of current that has been supplied and the length of time during which the current has been supplied).

The set temperature may be determined to be a temperature not higher than 0°C such as -20°C, -10°C, or 0°C, in view of the resistance to the operation described above. The steering force to be required needs to be increased with a decrease in the temperature of the steering system. Thus, the amount of raising of the upper limit value of the supply current may be increased with a decrease in the temperature of the steering system, namely, the upper limit value of the supply current may be made higher with a decrease in the temperature of the steering system.

In the meantime, when a speed of the vehicle (hereinafter referred to as "vehicle speed" where appropriate) is lowered to a certain extent, the steering force for steering the wheel is considerably large due to the influence of a frictional force between the tire and the road surface. When the vehicle is at a standstill, namely, when the vehicle speed is 0, the wheel has to be steered in what is called stationary steering state. This causes a need to generate a considerably large steering force, resulting in an excessively large supply current to the electric motor. Thus, when the vehicle speed is not higher than the set speed, the upper limit value of the supply current may be prohibited from being raised. For prohibiting the upper limit value from being raised in the stationary steering state or a state close to the stationary steering state, the set speed may be desirably determined such that the vehicle is regarded as being at a standstill at the set speed. Specifically, the set speed is 2-5 km/h, for instance.

For matching the operations of the two systems of the steering device to each other when the wheel is steered by both the two systems, the supply currents to be supplied to the electric motors of the respective two systems are desirably made equal to each other. That is, it is desirable to execute a control for causing the two systems to operate in a coordinated fashion (hereinafter referred to as "coordinated control" where appropriate). In the coordinated control, the current to be supplied to the electric motor of one of the two systems (i.e., a main system) may be determined, and the determined current may be supplied also to the electric motor of the other of the two systems (i.e., a sub system). In other words, the supply current to be supplied to the electric motors of the two systems may be determined in the main system, and the determined supply current may be supplied also to the sub system. In the steering system configured to execute the coordinated control described above, when the wheel is steered by only the other system, namely, when the wheel is steered by only the sub system, the current to be supplied to the electric motor of the other system may be determined independently and the determined current may be supplied to the electric motor of the other system.

BRIEF DESCRIPTION OF THE DRAWINGS

The objects, features, advantages, and technical and industrial significance of the present disclosure will be better understood by reading the following detailed description of an embodiment, when considered in connection with the accompanying drawings, in which:

Fig. 1 is a view schematically illustrating an overall configuration of a steering system according to one embodiment;
Fig. 2 is a view schematically illustrating heat sinks respectively provided for an electric motor and a controller of a steering device for protecting the electric motor and the controller from overheating;
Fig. 3 illustrates a flowchart of a basic steering program and a flowchart of a dependent steering program executed in the steering system according to the embodiment;
Fig. 4A is a graph representing a current limitation map for a high-temperature state utilized in determining an upper limit value of a supply current to a steering motor;

Fig. 4B is a graph representing a characteristic of a torque with respect to a rotational speed of the steering motor;

Fig. 5A is a graph representing a relationship between an environmental temperature and a steering force generated by the steering device;

Fig. 5B is a graph representing a current limitation map for a low-temperature state utilized in determining the upper limit value of the supply current to the steering motor;

Fig. 6 is a flowchart of a current limitation subroutine partly constituting the basic steering program; and

Fig. 7 is a flowchart of a reaction force application program executed in the steering system according to the embodiment.

DETAILED DESCRIPTION OF THE EMBODIMENT

Referring to the drawings, there will be described below in detail a steering system according to one embodiment of the present disclosure. It is to be understood that the present disclosure is not limited to the details of the following embodiment but may be embodied based on the forms described in Various Forms and may be changed and modified based on the knowledge of those skilled in the art.

A. Configuration of Steering System

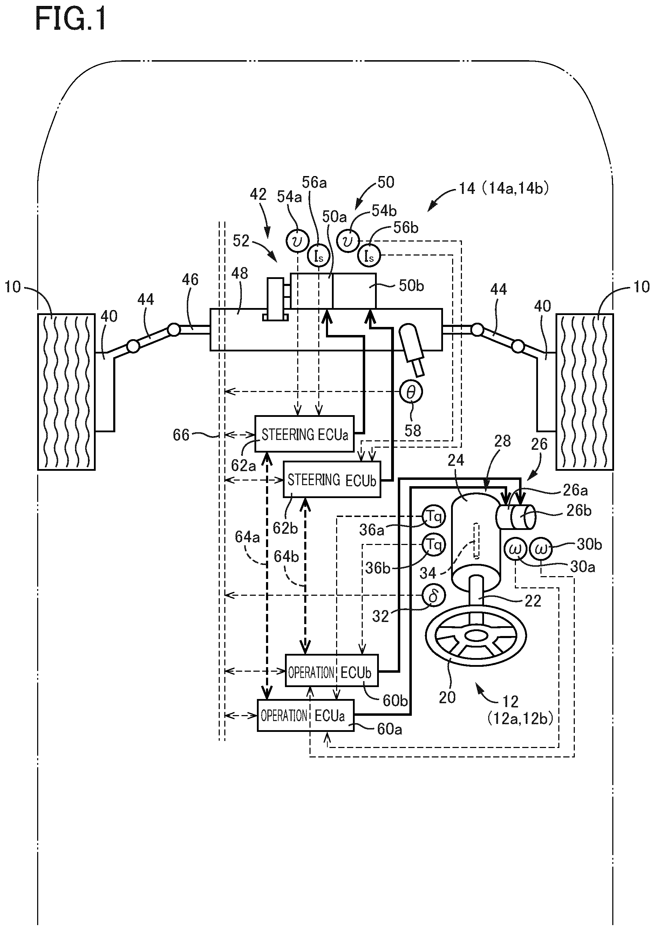

As schematically illustrated in Fig. 1, a steering system according to one embodiment of the present disclosure is installed on a vehicle for steering two wheels 10, i.e., front wheels 10, each as a steerable wheel. The present steering system is a steer-by-wire steering system including an operation device 12 and a steering device 14, which are mechanically independent of each other.

The operation device 12 includes: a) a steering wheel 20 (as one example of an operating member) operable by a driver to steer the wheels 10; b) a steering shaft 22 to one end of which is attached the steering wheel 20; c) a steering column 24 rotatably holding the steering shaft 22 and supported by an instrument panel reinforcement (not illustrated); and d) a reaction force applying mechanism 28 configured to apply, to the steering wheel 20 via the steering shaft 22, a reaction force (a counterforce) $F_{CT}$ against a steering operation of the steering wheel 20 by utilizing, as a force generation source, a reaction force motor 26 supported by the steering column 24. The reaction force motor 26 is an electric motor. Though the reaction force is a reaction force torque in a strict sense, a commonly used term "operation reaction force" will be hereinafter used. The reaction force applying mechanism 28 has an ordinary configuration including a speed reducer, etc., and a detailed description of the reaction force applying mechanism 28 is dispensed with.

The reaction force motor 26 is a three-phase brushless DC motor. Magnets are fixed to an outer circumference of a rotational shaft of the reaction force motor 26, and coils are provided on the motor housing so as to be opposed to the magnets. The reaction force motor 26 is a dual-system motor in which two sets of coils are provided for one magnet. Hereinafter, the two systems of the reaction force motor 26 will be respectively referred to as "reaction force motor 26a" and "reaction force motor 26b" where appropriate. The reaction force motors 26a, 26b respectively include motor rotation angle sensors 30a, 30b each for detecting a rotation angle $\omega$ in one rotation for phase switching in power supply to the corresponding reaction force motor 26a, 26b. The rotation angle in one rotation may be considered as "relative angle" or "phase". Hereinafter, a term "motor rotation angle sensor 30" is used as a general term for the motor rotation angle sensors 30a, 30b where appropriate. In the present embodiment, the operation device 12 is a redundant system including two systems, i.e., an operation device 12a and an operation device 12b.

The operation device 12 includes an operation angle sensor 32 for detecting an operation angle $\delta$ of the steering wheel 20 as a steering operation amount. Here, a posture of the steering wheel 20 in a straight traveling state of the vehicle is defined as a neutral posture. In this case, a rotation angle from the neutral posture in a rightward direction or a leftward direction (that may be considered as an absolute angle) is the operation angle $\delta$ of the steering wheel 20.

In the present steering system, a torsion bar 34 is incorporated in the steering shaft 22, as in typical power steering systems. The present steering system includes operation torque sensors 36a, 36b for detecting an operation torque $Tq_O$, which is an operation force applied to the steering wheel 20 by a driver, based on a torsional amount of the torsion bar 34. Hereinafter, a term "operation torque sensor 36" is used as a general term for the operation torque sensors 36a, 36b where appropriate. The two operation torque sensors 36a, 36b are provided so as to correspond to the two systems of the operation device 12.

The wheels 10 are supported by a body of the vehicle via respective steering knuckles 40 such that the wheels 10 are turnable or steerable. The steering knuckles 40 are constituent elements of respective suspension devices. The steering device 14 rotates the steering knuckles 40 to thereby steer the wheels 10 together. The steering device 14 includes a steering actuator 42 as a main constituent element. The steering actuator 42 includes: a) a steering rod (that may also be referred to as "rack bar") 46 whose opposite ends are coupled to the right and left steering knuckles 40 via respective link rods 44; b) a housing 48 fixedly supported by the vehicle body and supporting the steering rod 46 movably in the right-left direction; and c) a rod moving mechanism 52 configured to move the steering rod 46 in the right-left direction utilizing a steering motor 50 as a drive source. The steering motor 50 is an electric motor. The rod moving mechanism 52 is constituted principally by a ball screw mechanism including a ball groove formed in the steering rod 46 and a nut that is in engagement with the ball groove via bearing balls and that is rotated by the steering motor 50. The rod moving mechanism 52 has an ordinary configuration, and a detailed description of the rod moving mechanism 52 is dispensed with.

Like the reaction force motor 26, the steering motor 50 is a dual-system, three-phase brushless DC motor including two systems, i.e., a steering motor 50a and a steering motor 50b. The steering motors 50a, 50b respectively include motor rotation angle sensors 54a, 54b each for detecting a rotation angle v in one rotation for phase switching in power supply to the corresponding steering motor 50a, 50b. The rotation angle in one rotation may be considered as "relative angle" or "phase". Hereinafter, a term "motor rotation angle sensor 54" is used as a general term for the motor rotation angle sensors 54a, 54b where appropriate. In the present embodiment, the steering device 14 is a redundant system including two systems, i.e., a steering device 14a and a steering device 14b. The steering motors 50a, 50b respectively include current sensors 56a, 56b each for detecting a current $I_S$ actually supplied to the corresponding steering motor 50a, 50b. (The current $I_S$ will be hereinafter referred to as "steering current $I_S$" where appropriate.) Hereinafter, a term "current sensor 56" is used as a general term for the current sensors 56a, 56b where appropriate.

The steering device 14 includes a steering angle sensor 58 for detecting an amount of movement of the steering rod 46 in a rightward direction or a leftward direction from its neutral position (that is a position of the steering rod 46 in the straight traveling state of the vehicle) to thereby detect a steering angle θ, which is a steering amount of the wheels 10.

Control of the operation device 12, specifically, control of the operation reaction force $F_{CT}$, namely, control of the reaction force motor 26 of the operation device 12, is executed by operation electronic control units 60a, 60b, which correspond to the respective two systems of the operation device 12. Each operation electronic control unit (that will be hereinafter referred to as "operation ECU") 60a, 60b is an operation controller for a corresponding one of the two systems of the operation device 12. Hereinafter, a term "operation ECU 60" is used as a general term for the operation ECUs 60a, 60b where appropriate. The operation ECU 60 is constituted by a computer including a CPU, a ROM, a RAM, etc., and an inverter that is a driver (drive circuit) for the reaction force motor 26.

Similarly, control of the steering device 14, specifically, control of the steering angle θ, namely, control of the steering motor 50 of the steering device 14, is executed by steering electronic control units 62a, 62b, which correspond to the respective two systems of the steering device 14. Each steering electronic control unit (that will be hereinafter referred to as "steering ECU") 62a, 62b is a steering controller for a corresponding one of the two systems of the steering device 14. Hereinafter, a term "steering ECU 62" is used as a general term for the steering ECUs 62a, 62b where appropriate. The steering ECU 62 is constituted by a computer including a CPU, a ROM, a RAM, etc., and an inverter that is a driver (drive circuit) for the steering motor 50.

In the present embodiment, the operation device 12a, the steering device 14a, the operation ECU 60a, and the steering ECU 62a constitute one system as a main system while the operation device 12b, the steering device 14b, the operation ECU 60b, and the steering ECU 62b constitute another system as a sub system, so that the present steering system is a dual-system steering system. In this configuration, the operation device 12a and the steering device 14a are connected by a dedicated communication line 64a while the operation device 12b and the steering device 14b are connected by a dedicated communication line 64b. (Hereinafter, a term "dedicated communication line 64" is used as a general term for the dedicated communication lines 64a, 64b where appropriate.) For enabling communication between the operation device 12 and the steering device 14 in mutually different systems, the operation devices 12 and the steering devices 14 are connected to a CAN (car area network or controllable area network) 66, which is a common communication line. It may be considered that the two operation ECUs 60 and the two steering ECUs 62 constitute a single controller in the present steering system.

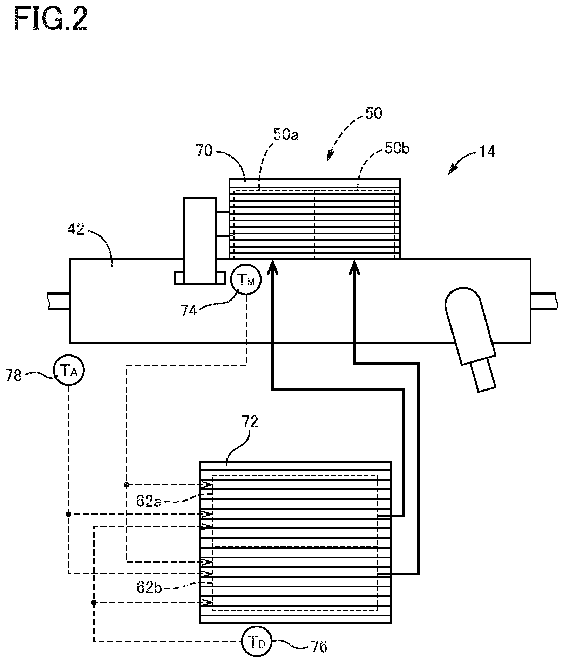

The steering force generated by the steering device 14 for steering the wheels 10 sometimes become relatively large, and a relatively large steering current $I_S$ is supplied to the steering motor 50, which is an electric motor. From the viewpoint of overheating protection, a heat sink 70 is provided for the steering motor 50 while a heat sink 72 is provided for the steering ECUs 62a, 62b respectively having the drivers for the steering motors 50a, 50b, as illustrated in Fig. 2. Each of the heat sinks 70, 72 has an ordinary structure, and a detailed description of which is dispensed with.

As described above, the steering motor 50 is the dual-system motor including the steering motor 50a and the steering motor 50b. The heat sink 70 is used in common to the steering motor 50a and the steering motor 50b. The steering ECU 62a and the steering ECU 62b are disposed so as to be in close contact with each other, and the heat sink 72 is used in common to the steering ECU 62a and the steering ECU 62b.

From the viewpoint of overheating protection, a temperature sensor 74 is provided for the steering motor 50 to detect a temperature of the steering motor 50, i.e., a motor temperature $T_M$, and a temperature sensor 76 is provided for the steering ECU 62 to detect a temperature of a board of the drive circuit of the steering ECU 62, i.e., a board temperature $T_D$. The temperature sensors 74, 76 respectively output temperature detection signals to both the steering ECU 62a and the steering ECU 62b. Further, a temperature sensor 78 is provided for the housing of the steering actuator 42 to detect a temperature of the environment in which the present steering system is placed, i.e., an environmental temperature $T_A$. The temperature sensor 78 outputs detection signals to both the steering ECU 62a and the steering ECU 62b.

B. Control of Steering System

Hereinafter, there will be described the control of the present steering system, namely, there will be described in order a steering control for the steering device 14 and a reaction force control for the reaction force applying mechanism 28 of the operation device 12.

(a) Steering Control

The steering control is for steering the wheels 10 in accordance with a steering request, namely, in accordance with the operation angle $\delta$ of the steering wheel 20 in manual driving. The steering control is executed by the steering ECU 62. There will be hereinafter described a normal-condition control executed in a normal condition in which none of the two systems are in failure, a failure-condition control executed in a failure condition in which one of the two systems is in failure, and limitation imposed on the steering current $I_S$ to be supplied to the steering motor 50 executed in each of the normal-condition control and the failure-condition control.

i) Normal-Condition Control

The steering ECU 62a and the steering ECU 62b, which constitute the dual-system controller, are configured to execute a steering process for the steering control independently of each other. In the normal condition, the steering ECU 62a and the steering ECU 62b execute what is called coordinated control for ensuring a smooth operation of the steering device 14, specifically, a smooth operation of the steering actuator 42, and for causing the main system and the sub system to generate mutually the same steering force. In the coordinated control, the steering ECU 62a constituting the main system executes a basic steering process, and the steering ECU 62b constituting the sub system executes a dependent steering process for depending on the main system. In this respect, the basic steering process is executable also by the steering ECU 62b. In the following description, the suffixes a, b used with the constituent elements will be omitted in a case where it is not necessary to distinguish the main system and the sub system from each other and in a case where the processes and the like are executable by both the two systems.

The motor rotation angle $\omega$ of the reaction force motor 26 and the operation angle $\delta$ of the steering wheel 20 have a relation to satisfy a predetermined gear ratio. At startup of the vehicle, calibration of the motor rotation angle $\omega$ is carried out based on the operation angle $\delta$ detected by the operation angle sensor 32. In the steering control and the reaction force control, the operation ECU 60 obtains the operation angle $\delta$ based on the motor rotation angle $\omega$ detected via the motor rotation angle sensor 30. In the basic steering process, the steering ECU 62 receives information on the operation angle $\delta$ from the operation ECU 60 of the same system. The steering ECU 62 determines a target steering angle $\theta^*$, which is a target of the steering angle $\theta$ of the wheels 10, by multiplying the received operation angle $\delta$ by a steering gear ratio $R_G$, according to the following expression:

$$\theta^* = R_G \times \delta$$

Like the operation angle $\delta$, the steering angle $\theta$ of the wheels 10 and the motor rotation angle $v$ of the steering motor 50 have a relation to satisfy a predetermined gear ratio. At startup of the vehicle, calibration of the motor rotation angle $v$ is carried out based on the steering angle $\theta$ detected via the steering angle sensor 58. The control for the steering angle $\theta$ of the wheels 10 is executed utilizing the motor rotation angle $v$ in place of the steering angle $\theta$. Thus, the steering ECU 62 determines a target motor rotation angle $v^*$, which is a target of the motor rotation angle $v$ of the steering motor 50, based on the determined target steering angle $\theta^*$.

The steering ECU 62 detects an actual motor rotation angle $v$ of the steering motor 50 via the motor rotation angle sensor 54 and determines a motor rotation angle deviation $\Delta v$, which is a deviation of the motor rotation angle $v$ with respect to the target motor rotation angle $v^*$, according to the following expression:

$$\Delta v = v^* - v$$

Here, the torque generated by the steering motor 50 is referred to as a steering torque $Tq_S$. The steering ECU 62 determines the steering torque $Tq_S$ to be generated according to a feedback control law based on the motor rotation angle deviation $\Delta v$, namely, according to the following expression. In the following expression, the first term, the second term, and the third term are a proportional term, an integral term, and a derivative term, respectively, and "$G_P$", "$G_I$", and "$G_D$" are a proportional term gain, an integral term gain, and a derivative term gain, respectively.

$$Tq_S = G_P \times \Delta v + G_I \times \int \Delta v \, dt + G_D \times d\Delta v / dt$$

The steering current $I_S$ supplied to the steering motor 50 and the steering torque $Tq_S$ are generally proportional to each other. According to the relationship, the steering ECU 62 determines the steering current $I_S$ to be supplied to the steering motor 50 based on the determined steering torque $Tq_S$.

In the present steering system, limitation is imposed on the steering current $I_S$ for protecting the steering device 14 from overheating. The steering ECU 62 executes a current limiting process for the determined steering current $I_S$. The current limiting process will be later described in detail. The steering ECU 62 supplies, to the steering motor 50, the steering current $I_S$ that has undergone the current limiting process. As later explained in detail, the value of the steering current $I_S$ is utilized in the control for the reaction force applying mechanism 28 of the operation device 12 and in the coordinated steering control. Accordingly, the steering ECU 62 transmits information on the steering current $I_S$ to be supplied to the steering motor 50.

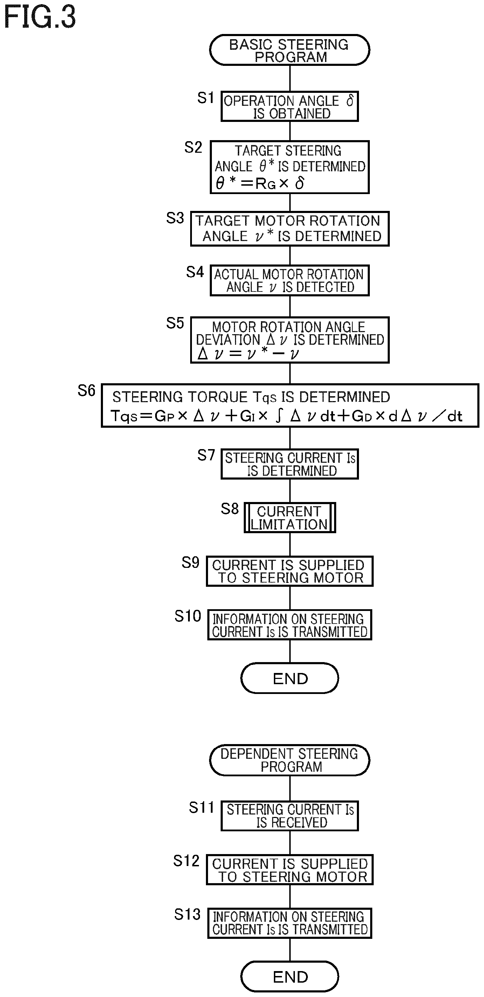

The steering ECU 62 repeatedly executes a basic steering program represented by a flowchart of Fig. 3 at a short time pitch of from several to several tens of milliseconds, for instance, so that the basic steering process is executed. The process according to the program will be hereinafter briefly described referring to the flowchart.

In the process according to the basic steering program, the control flow starts with S1 at which the operation angle $\delta$ of the steering wheel 20 is obtained from the operation ECU 60. At S2, the target steering angle $\theta^*$ is determined. At S3, the target motor rotation angle $v^*$ is determined. At S4, the actual motor rotation angle $v$ is detected. At S5, the motor rotation angle deviation $\Delta v$ is determined. At S6, the steering torque $Tq_S$ is determined based on the motor rotation angle deviation $\Delta v$. At S7, the steering current $I_S$, which is the supply current to the steering motor 50, is determined based on the steering torque $Tq_S$. At S8, the determined steering current $I_S$ is subjected to the current limiting process. At S9, the steering current $I_S$ that has undergone the current limiting process is supplied to the steering motor 50. At S10, the information on the steering current $I_S$ to be supplied to the steering motor 50 is transmitted.

In the coordinated control, the steering ECU 62b constituting the sub system executes, as a control process, the dependent steering process for depending on the main system. As described above, the steering ECU 62a constituting the main system transmits, to the steering ECU 62b, the information on the steering current $I_S$ that the steering ECU 62a itself supplies to the steering motor 50a. In the dependent steering process, the steering ECU 62b does not determine the steering current $I_S$ that the steering ECU 62b itself supplies to the steering motor 50b, but supplies, to the steering motor 50b, the steering current $I_S$ based on the received information.

The steering ECU 62b repeatedly executes a dependent steering program represented by a flowchart of Fig. 3 at a short time pitch of from several to several tens of milliseconds, for instance, so that the dependent steering process is executed. The process according to the program will be briefly described referring to the flowchart. In the process according to the dependent steering program, the control flow starts with S11 at which the steering ECU 62b receives, from the steering ECU 62a, the steering current $I_S$ that the steering ECU 62b itself should supply. In this respect, the steering current $I_S$ has undergone the current limiting process described above. At S12, the steering current $I_S$ is transmitted to the steering motor 50b. At S13, the information on the steering current $I_S$ is transmitted.

ii) Failure-Condition Control

In a case where one of the two systems fails to operate, the failure-condition control is executed. In a case where the failed system is the sub system, the sub system is not operated and the steering control is executed by only the main system. In a case where the failed system is the main system, the main system is not operated and the steering control is executed by only the sub system. In this instance, the steering ECU 62b constituting the sub system executes the basic steering process in place of the dependent steering process. That is, the steering ECU 62b executes the basic steering program in place of the dependent steering program.

iii) Limitation Imposed on Current Supplied to Steering Motor

If a large steering current $I_S$ is supplied to the steering motor 50 for a long length of time, the steering motor 50 and the drive circuit for the steering motor 50, which is the driver such as the inverter, are overheated. For protecting the steering device 14 from overheating, limitation is imposed on the steering current Is. Specifically, an upper limit value $I_{S-LIM}$ is set for the steering current $I_S$ to be supplied to each of the steering motor 50a and the steering motor 50b, and the steering current $I_S$ greater than the upper limit value $I_{S-LIM}$ is prohibited from being supplied. In other words, when the steering current $I_S$ determined as described above exceeds the upper limit value $I_{S-LIM}$, the steering current $I_S$ to be supplied is subjected to a process by which the steering current $I_S$ is made equal to the upper limit value $I_{S-LIM}$.

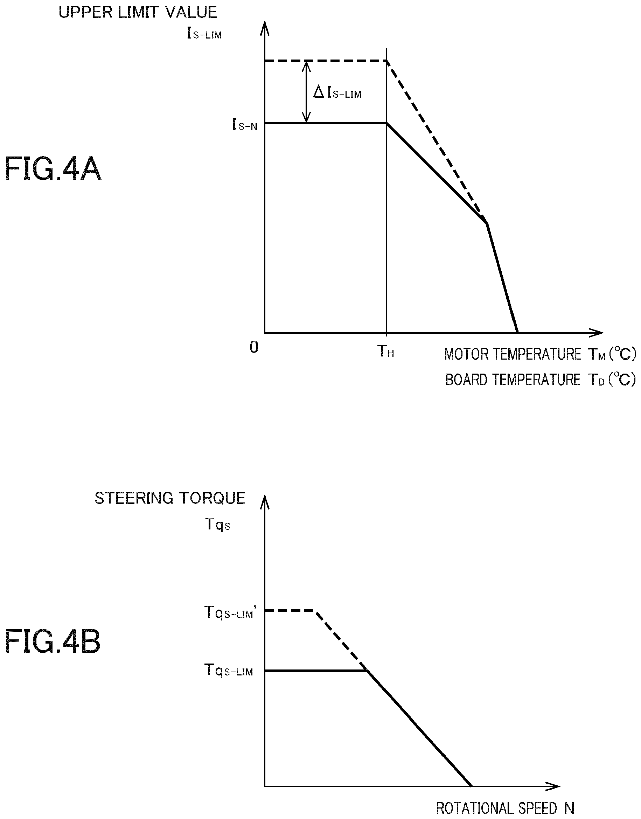

Here, the limitation imposed on the steering current $I_S$ in terms of overheating protection is referred to as "current limitation for overheating protection". As the current limitation for overheating protection, the steering ECU 62 refers to a current limitation map for a high-temperature state indicated by the graph of Fig. 4A and determines the upper limit value $I_{S-LIM}$ based on the motor temperature $T_M$ detected by the temperature sensor 74 and the board temperature $T_D$ detected by the temperature sensor 76. According to the current limitation map for the high-temperature state, when the motor temperature $T_M$ and the board temperature $T_D$ are higher than or equal to a monitoring required threshold $T_H$ set at a relatively high temperature, the upper limit value $I_{S-LIM}$ is limited so as to be lowered with an increase in the motor temperature $T_M$ and the board temperature $T_D$. For easy understanding, there is employed, for the motor temperature $T_M$ and the board temperature $T_D$, the same map, i.e., the current limitation map for the high-temperature state illustrated in Fig. 4A. Actually, two maps are prepared respectively for the motor temperature $T_M$ and the board temperature $T_D$, and there is employed a lower one of the upper limit values $I_{S-LIM}$, which are determined by the two maps. The current limitation map for the high-temperature state shows only the upper limit value $I_{S-LIM}$ in a state in which the motor temperature $T_M$ and the board temperature $T_D$ are not lower than 0°C. In a state in which the motor temperature $T_M$ and the board temperature $T_D$ are lower than the monitoring required threshold $T_H$, the upper limit value $I_{S-LIM}$ is constant irrespective of the level of the motor temperature $T_M$ and the board temperature $T_D$.

Referring to the graph of Fig. 4B, there will be described a characteristic of the steering motor 50, specifically, a characteristic of the steering torque $Tq_S$ with respect to the rotational speed N (i.e., the number of rotations per unit of time) of the steering motor 50. The characteristic of the steering torque $Tq_S$ with respect to the rotational speed N will be hereinafter referred to as "N-T characteristic" where appropriate. The steering motor 50 assumes the N-T characteristic represented by the solid line in the graph of Fig. 4B as a result of the limitation imposed on the steering current $I_S$ described above. Specifically, the upper limit value $I_{S-LIM}$ is set for the steering current $I_S$, and the steering torque $Tq_S$ accordingly has an upper limit. (The upper limit of the steering torque $Tq_S$ will be hereinafter referred to as "upper limit torque $Tq_{S-LIM}$" where appropriate). That is, the steering device 14 cannot generate the steering force exceeding the steering force that corresponds to the upper limit torque $Tq_{S-LIM}$.

In the normal situation in which none of the two systems are in failure, the steering device 14 can generate the steering torque $Tq_S$ up to twice as large as the steering torque $Tq_S$ indicated by the solid line in the graph of Fig. 4B. In the failure condition in which one of the two systems fails to operate, the steering device 14 can generate only the steering torque $Tq_S$ indicated by the solid line in the graph of Fig. 4B. That is, the steering torque $Tq_S$ generated in the failure condition is half the steering torque $Tq_S$ generated in the normal condition. In the failure condition, therefore, the upper limit value $I_{S-LIM}$ of the steering current $I_S$ is raised for enabling the steering torque $Tq_S$ indicated by the dashed line to be generated, namely, for increasing the upper limit torque $Tq_{S-LIM}$ up to the upper limit torque $Tq_{S-LIM}'$.

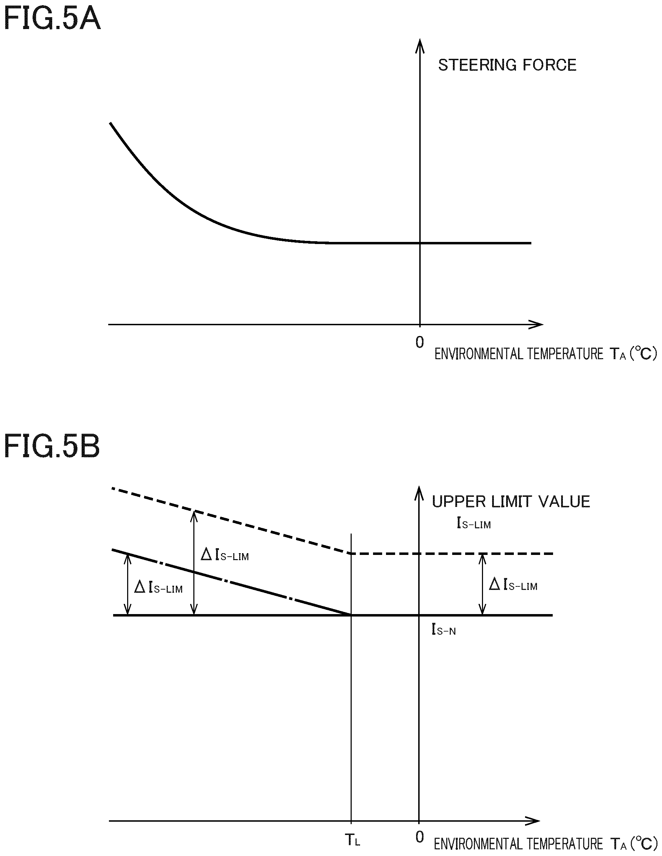

The graph of Fig. 5A schematically illustrates a relationship between the environmental temperature $T_A$ and the steering force that the steering device 14 needs to generate when performing a specific steering motion. When the environmental temperature $T_A$ is lowered to a temperature not higher than a certain level (e.g., not higher than -10°C), the resistance to the operations of the suspension device, the steering actuator 42, etc.,

increases due to an increase in the viscosity of the lubricant such as grease and a decrease in clearances among the constituent components, for instance. The increase in the resistance leads to an increase in the steering force to be required. In view of this, it is desirable to raise the upper limit value $I_{S-LIM}$ of the steering current $I_S$ when the temperature of the steering system, specifically, the environmental temperature $T_A$, becomes lower than or equal to a set temperature $T_L$ (e.g., -10°C) set at a relatively low temperature. In view of the fact that the resistance to the operations increases with an decrease in the environmental temperature $T_A$, the amount of raising of the upper limit value $I_{S-LIM}$ is preferably increased with a decrease in the environmental temperature $T_A$, namely, the upper limit value $I_{S-LIM}$ is preferably set to a higher value with a decrease in the environmental temperature $T_A$.

In view of the above, the steering ECU 62 of the present steering system carries out, in the current limiting process described above, raising of the upper limit value $I_{S-LIM}$ of the steering current $I_S$ (hereinafter referred to as "upper-limit raising" where appropriate) in the failure condition. In the present steering system, there are prepared two configurations, namely, two modes, for the upper-limit raising. One of the two modes is a standard raising mode in which the upper-limit raising is carried out on condition that the wheels 10 are steered by only one of the two systems. The other of the two modes is a temperature-dependent raising mode in which the upper-limit raising is carried out on condition that the wheels 10 are steered by only one of the two systems and the environmental temperature $T_A$ is not higher than the set temperature $T_L$. The mode according to which the upper-limit raising is carried out is selected in advance from the two modes described above depending on the type, the specifications, etc., of the vehicle at the time of manufacture.

Specifically, the steering ECU 62 refers to a current limitation map for a low-temperature state illustrated by the graph of Fig. 5B and determines the upper limit value $I_{S-LIM}$ of the steering current Is. In the normal condition, the upper limit value $I_{S-LIM}$ is constant at the standard value $I_{S-N}$ as indicated by the solid line in the map. In a case where the upper-limit raising is carried out in the standard raising mode in the failure condition, the upper limit value $I_{S-LIM}$ is raised by an amount of raising $\Delta I_{S-LIM}$ when the environmental temperature $T_A$ is higher than the set temperature $T_L$, and the upper limit value $I_{S-LIM}$ is determined such that the amount of raising $\Delta I_{S-LIM}$ increases with a decrease in the environmental temperature $T_A$ when the environmental temperature $T_A$ is lower than or equal to the set temperature $T_L$, as indicated by the dashed line in the map. In a case where the upper-limit raising is carried out in the temperature-dependent raising mode, the upper limit value $I_{S-LIM}$ is not raised when the environmental temperature $T_A$ is higher than the set temperature $T_L$, and the upper limit value $I_{S-LIM}$ is determined such that the amount of raising $\Delta I_{S-LIM}$ in-

creases with a decrease in the environmental temperature $T_A$ when the environmental temperature $T_A$ is lower than or equal to the set temperature $T_L$, as indicated by the long dashed short dashed line in the map.

In a case where the motor temperature $T_M$ and the board temperature $T_D$ are higher than or equal to the monitoring required threshold $T_H$ set at a relatively high temperature, the current limitation for overheating protection described above is executed with a higher priority than the upper-limit raising. The current limitation for overheating protection is related to the upper-limit raising. Specifically, in the normal condition and the temperature-dependent raising mode, the steering ECU 62 refers to the solid line in the current limitation map for the high-temperature state (Fig 5A) and determines the upper limit value $I_{S-LIM}$ such that the upper limit value $I_{S-LIM}$ decreases from the standard value $I_{S-N}$ with an increase in the motor temperature $T_M$ and the board temperature $T_D$. In the standard raising mode, the steering ECU 62 refers to the dashed line in the current limitation map for the high-temperature state and determines the upper limit value $I_{S-LIM}$ such that the upper limit value $I_{S-LIM}$ decreases from a value, which is raised from the standard value $I_{S-N}$ by the amount of raising $\Delta I_{S-LIM}$, with an increase in the motor temperature $T_M$ and the board temperature $T_D$.

In the failure condition, the upper limit value $I_{S-LIM}$ of the steering current $I_S$ is raised in only one of the two systems. It is thus expected that the amount of heat generated in the steering motor 50 of the one system and the amount of heat generated in the steering ECU 62 including the drive circuit for the steering motor 50 of the one system are increased. However, each of the heat sinks 70, 72 utilized in common to the two systems in the normal condition is utilized dedicatedly for that one system in the failure condition, thus preventing or reducing an increase in the temperatures of the steering motor 50 and the steering ECU 62.

In a case where the vehicle speed v is low, specifically, in a case where the vehicle is at a standstill or in a case where the vehicle speed v is low to such an extent that the vehicle is regarded as being at a standstill, the wheels 10 are steered in the stationary steering state or in a state close to the stationary steering state. The steering current $I_S$ is considerably large in those states, resulting in a high possibility of overheating of the steering motor 50 and the steering ECU 62. When the vehicle speed v is increased after the vehicle starts to run, the vehicle gets out of those states, resulting in a reduced possibility of overheating of the steering motor 50 and the steering ECU 62. Accordingly, the steering ECU 62 does not carry out the upper-limit raising when the vehicle speed v is lower than or equal to a set speed $v_{TH}$, which is determined, in advance, to be a considerably low speed. In this respect, the steering ECU 62 obtains information on the vehicle speed v from a brake system (not illustrated) via the CAN 66.

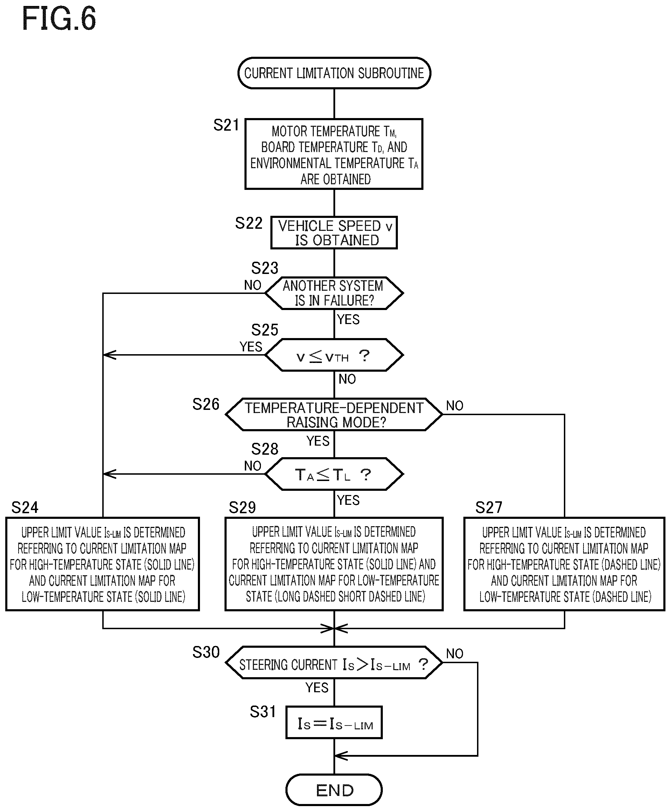

The steering ECU 62 executes, at S8 of the basic steering program, a current limitation subroutine represented by a flowchart of Fig. 6, so that the current limitation described above is executed. In the process according to the subroutine, the control flow starts with S21 at which the motor temperature $T_M$, the board temperature $T_D$, and the environmental temperature $T_A$ are respectively obtained based on detection by the temperature sensor 74, the temperature sensor 76, and the temperature sensor 78. At S22, the vehicle speed v is obtained from the brake system.

At S23, it is determined whether the wheels 10 have to be steered by one of the two systems that includes the steering ECU 62 currently executing the subroutine (hereinafter referred to as "own system"), namely, it is determined whether the other of the two systems (hereinafter referred to as "another system") is in failure. In a case where another system is not in failure, the raising of the upper limit value $I_{S-LIM}$ of the steering current $I_S$ described above is not carried out, in other words, the upper-limit raising is not carried out. The control flow then proceeds to S24 at which the steering ECU 62 refers to the solid line in the current limitation map for the high-temperature state of Fig. 4A and the solid line in the current limitation map for the low-temperature state of Fig. 5B, so as to determine the upper limit value $I_{S-LIM}$.

In a case where another system is in failure, the control flow proceeds to S25 at which it is determined whether the vehicle speed v is not higher than the set speed $v_{TH}$. When the vehicle speed v is not higher than the set speed $v_{TH}$, the upper-limit raising is not carried out. The control flow then proceeds to S24 at which the steering ECU 62 refers to the solid line in the current limitation map for the high-temperature state and the solid line in the current limitation map for the low-temperature state, so as to determine the upper limit value $I_{S-LIM}$. When the vehicle speed v is higher than the set speed $v_{TH}$, on the other hand, the control flow proceeds to S26 at which it is determined, for carrying out the upper-limit raising, whether the mode of the upper-limit raising is the temperature-dependent raising mode.

When the mode is not the temperature-dependent raising mode, namely, when the mode is the standard raising mode, the control flow proceeds to S27 for carrying out the upper-limit raising regardless of the level of the environmental temperature $T_A$. Specifically, at S27, the steering ECU 62 refers to the dashed line in the current limitation map for the high-temperature state and the dashed line in the current limitation map for the low-temperature state, so as to determine the upper limit value $I_{S-LIM}$. When the mode is the temperature-dependent raising mode, it is determined at S28 whether the environmental temperature $T_A$ is not higher than the set temperature $T_L$.

When the environmental temperature $T_A$ is higher than the set temperature $T_L$ in the temperature-dependent raising mode, the upper-limit raising is not carried out. The control flow then proceeds to S24 at which the steering ECU 62 refers to the solid line in the current limitation map for the high-temperature state and the solid line in the current limitation map for the low-temperature state, so as to determine the upper limit value $I_{S-LIM}$. When the environmental temperature $T_A$ is not higher than the set temperature $T_L$, the control flow proceeds to S29 at which the steering ECU 62 refers to the solid line in the current limitation map for the high-temperature state and the long dashed short dashed line in the current limitation map for the low-temperature state, so as to determine the upper limit value $I_{S-LIM}$.

After the upper limit value $I_{S-LIM}$ is determined as described above, the control flow proceeds to S30 at which it is determined based on the determined upper limit value $I_{S-LIM}$ whether the steering current $I_S$ determined at S7 of the basic steering program is greater than the upper limit value $I_{S-LIM}$. When the steering current $I_S$ is greater than the upper limit value $I_{S-LIM}$, the control flow proceeds to S31 at which the steering current $I_S$ is determined to be equal to the upper limit value $I_{S-LIM}$. When the steering current $I_S$ is not greater than the upper limit value $I_{S-LIM}$, on the other hand, the value of the steering current $I_S$ remains unchanged.

(b) Reaction Force Control

The reaction force control is for giving, to the driver, an operation feeling with respect to the steering operation. The present steering system is configured such that, in the normal condition, the operation device 12a in the main system and the operation device 12b in the subsystem apply the same operation reaction force $F_{CT}$ to the steering wheel 20 independently of and in parallel to each other. There will be hereinafter described a reaction force application process executed in the reaction force control by each of the operation ECU 60a constituting the main system and the operation ECU 60b constituting the sub system. Since the reaction force application process executed by the operation ECU 60a and the reaction force application process executed by the operation ECU 60b are substantially identical to each other, the following description will be made focusing on one reaction force application process.

The operation ECU 60 determines the operation reaction force $F_{CT}$ based on two components, i.e., a steering-load-dependent component Fs and an operation-force-dependent reduction component $F_A$, according to the following expression:

$$F_{CT} = F_S - F_A$$

The steering-load-dependent component Fs is a component relating to the steering force (the steering torque $Tq_S$ of the steering motor 50) necessary for steering the wheels 10. The steering-load-dependent component $F_S$ is determined based on the steering current $I_S$ being supplied to the steering motor 50. Though not described in detail, it is recognized that the steering load of the wheels 10 increases with an increase in the steering current $I_S$, and the steering-load-dependent component Fs is determined to be a great value. In this respect, the information relating to the steering current $I_S$ being actually supplied to the steering motor 50 is transmitted from the steering ECU 62 to the operation ECU 60 in the same system via the dedicated communication line 64.

The operation-force-dependent reduction component $F_A$ may be considered as a component for giving, to the driver, an operation feeling in what is called power steering system. In the power steering system, an assist torque corresponding to the operation torque $Tq_O$ is applied to the steering shaft 22. The operation-force-dependent reduction component $F_A$ is determined according to the following expression so as to simulate the assist torque:

$$F_A = \beta \times Tq_O$$

In the above expression, "$\beta$" is a gain for determining the operation-force-dependent reduction component $F_A$. The operation ECU 60 detects the operation torque $Tq_O$ via the operation torque sensor 36.

Based on the thus determined operation reaction force $F_{CT}$, the operation ECU 60 determines a reaction force current $I_C$ to be supplied to the reaction force motor 26 according to the following expression and supplies the determined reaction force current $I_C$ to the reaction force motor 26:

$$I_C = \alpha \times F_{CT}$$

In the above expression, "$\alpha$" is a current determining coefficient set in advance.

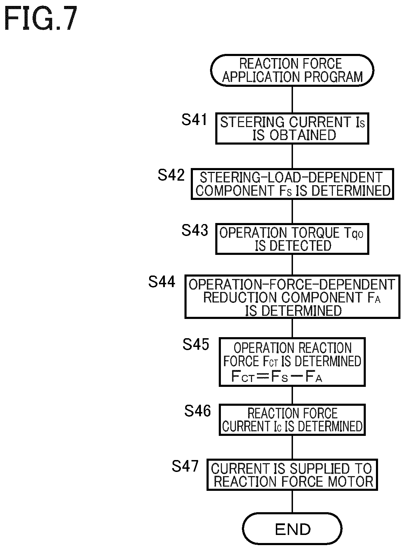

The computer of each of the operation ECU 60a and the operation ECU 60b repeatedly executes a reaction force application program represented by a flowchart of Fig. 7 at a short time pitch of from several to several tens of milliseconds, for instance, so that the reaction force application process is executed. The process according to the program will be hereinafter briefly described. At S41, the steering current $I_S$ is obtained. At S42, the steering-load-dependent component $F_S$ is determined based on the steering current $I_S$. At S43, the operation torque $Tq_O$ is detected. At S44, the operation-force-dependent reduction component $F_A$ is determined based on the operation torque $Tq_O$. At S45, the operation reaction force $F_{CT}$ is determined based on the steering-load-dependent component $F_S$ and the operation-force-dependent reduction component $F_A$. At S46, the reaction force current $I_C$ to be supplied to the reaction force motor 26 is determined based on the operation reaction force $F_{CT}$. At S47, the current is supplied to the reaction force motor 26 based on the determined reaction force current $I_C$.

The reaction force control executed in the failure condition will be briefly described. The reaction force control is executed by only one of the main system and the sub system that is not in failure. In other words, only the operation ECU 60 in the one of the two systems that is not in failure executes the reaction force application process.

**Claims**

1. A steer-by-wire steering system for a vehicle, comprising:

   an operating member (20) operable by a driver;
   a dual-system steering device (14, 14a, 14b) including two systems each of which includes an electric motor (50, 50a, 50b) as a drive source, the steering device (14, 14a, 14b) being configured to steer a wheel (10); and
   a controller (62, 62a, 62b) configured to control a current to be supplied to each of the electric motors (50, 50a, 50b) of the respective two systems so as to cause the steering device (14, 14a, 14b) to steer the wheel (10) in accordance with an operation of the operating member (20),
   wherein the controller (62, 62a, 62b) is configured to prohibit the current greater than an upper limit value from being supplied to the electric motors (50, 50a, 50b) of the respective two systems,
   wherein, when the wheel (10) is steered by only one of the two systems, the controller (62, 62a, 62b) raises the upper limit value of the current to be supplied to the electric motor (50, 50a, 50b) of the one of the two systems, and
   wherein, when a temperature of the steering system is not higher than a set temperature, the controller (62, 62a, 62b) increases an amount of raising of the upper limit value in consideration of an increase in a steering force to be required.

2. The steer-by-wire steering system according to claim 1, wherein the controller (62, 62a, 62b) is configured to increase the amount of raising of the upper limit value with a decrease in the temperature of the steering system.

3. The steer-by-wire steering system according to claim 1 or 2, wherein the set temperature is not higher than 0°C.

4. A steer-by-wire steering system for a vehicle, comprising:

   an operating member (20) operable by a driver;
   a dual-system steering device (14, 14a, 14b) including two systems each of which includes an electric motor (50, 50a, 50b) as a drive source, the steering device (14, 14a, 14b) being configured to steer a wheel (10); and
   a controller (62, 62a, 62b) configured to control a current to be supplied to each of the electric motors (50, 50a, 50b) of the respective two systems so as to cause the steering device (14, 14a, 14b) to steer the wheel (10) in accordance with an operation of the operating member (20),
   wherein the controller (62, 62a, 62b) is configured to prohibit the current greater than an upper limit value from being supplied to the electric motors (50, 50a, 50b) of the respective two systems,
   wherein, when the wheel (10) is steered by only one of the two systems, the controller (62, 62a, 62b) raises the upper limit value of the current to be supplied to the electric motor (50, 50a, 50b) of the one of the two systems on condition that a temperature of the steering system is not higher than a set temperature in consideration of an increase in a steering force to be required.

5. The steer-by-wire steering system according to claim 4, wherein the controller (62, 62a, 62b) is configured to increase an amount of raising of the upper limit value with a decrease in the temperature of the steering system.

6. The steer-by-wire steering system according to claim 4 or 5, wherein the set temperature is not higher than 0°C.

7. The steer-by-wire steering system according to any one of claims 1-6, wherein the controller (62, 62a, 62b) does not raise the upper limit value when a speed of the vehicle is not higher than a set speed.

8. The steer-by-wire steering system according to claim 7, wherein the set speed is determined such that the vehicle is regarded as being at a standstill at the set speed.

9. The steer-by-wire steering system according to any one of claims 1-8,

   wherein, in a case where the wheel (10) is steered by both the two systems of the steering device (14, 14a, 14b), the controller (62, 62a, 62b) determines the current to be supplied to the electric motor (50, 50a, 50b) of one of the two systems and supplies the determined current to not only the electric motor (50, 50a, 50b) of the one of the two systems but also the electric motor (50, 50a, 50b) of the other of the two systems, and
   wherein, in a case where the wheel (10) is steered by only the other of the two systems of the steering device (14, 14a, 14b), the controller (62, 62a, 62b) determines the current to be supplied to the electric motor (50, 50a, 50b) of the other of the two systems and supplies the determined current to the electric motor (50, 50a, 50b) of the other of the two systems.

**Patentansprüche**

1. Steer-by-Wire-Lenksystem für ein Fahrzeug, mit:

   einem Betätigungselement (20), das durch einen Fahrer betätigbar ist;
   einer Dualsystem-Lenkvorrichtung (14, 14a, 14b) mit zwei Systemen, von denen jedes einen Elektromotor (50, 50a, 50b) als eine Antriebsquelle aufweist, wobei die Lenkvorrichtung (14, 14a, 14b) konfiguriert ist, ein Rad (10) zu lenken; und
   einer Steuerung (62, 62a, 62b), die konfiguriert ist, einen Strom zu steuern, der jedem der Elektromotoren (50, 50a, 50b) der jeweiligen zwei Systeme zuzuführen ist, um die Lenkvorrichtung (14, 14a, 14b) zu veranlassen, das Rad (10) gemäß einer Betätigung des Betätigungselements (20) zu lenken,
   wobei die Steuerung (62, 62a, 62b) konfiguriert ist, zu verhindern, dass der Strom, der größer als ein oberer Grenzwert ist, den Elektromotoren (50, 50a, 50b) der jeweiligen zwei Systeme zugeführt wird,
   wobei, wenn das Rad (10) durch nur eines der zwei Systeme gelenkt wird, die Steuerung (62, 62a, 62b) den oberen Grenzwert des Stroms erhöht, der dem Elektromotor (50, 50a, 50b) des einen der zwei Systeme zuzuführen ist, und
   wobei, wenn eine Temperatur des Lenksystems nicht höher als eine eingestellte Temperatur ist, die Steuerung (62, 62a, 62b) einen Betrag eines Erhöhens des oberen Grenzwerts unter Berücksichtigung einer Erhöhung einer anzufordernden Lenkkraft erhöht.

2. Steer-by-Wire-Lenksystem nach Anspruch 1, wobei die Steuerung (62, 62a, 62b) konfiguriert ist, den Betrag des Erhöhens des oberen Grenzwerts mit einer Verringerung der Temperatur des Lenksystems zu erhöhen.

3. Steer-by-Wire-Lenksystem nach Anspruch 1 oder 2, wobei die eingestellte Temperatur nicht höher als 0°C ist.

4. Steer-by-Wire-Lenksystem für ein Fahrzeug, mit:

   einem Betätigungselement (20), das durch einen Fahrer betätigbar ist;
   einer Dualsystem-Lenkvorrichtung (14, 14a, 14b) mit zwei Systemen, von denen jedes einen Elektromotor (50, 50a, 50b) als eine Antriebsquelle aufweist, wobei die Lenkvorrichtung (14, 14a, 14b) konfiguriert ist, ein Rad (10) zu lenken; und
   einer Steuerung (62, 62a, 62b), die konfiguriert ist, einen Strom zu steuern, der jedem der Elektromotoren (50, 50a, 50b) der jeweiligen zwei Systeme zuzuführen ist, um die Lenkvorrichtung (14, 14a, 14b) zu veranlassen, das Rad (10) gemäß einer Betätigung des Betätigungselements (20) zu lenken,
   wobei die Steuerung (62, 62a, 62b) konfiguriert ist, zu verhindern, dass der Strom, der größer als ein oberer Grenzwert ist, den Elektromotoren (50, 50a, 50b) der jeweiligen zwei Systeme zugeführt wird,
   wobei, wenn das Rad (10) durch nur eines der zwei Systeme gelenkt wird, die Steuerung (62, 62a, 62b) den oberen Grenzwert des Stroms erhöht, der dem Elektromotor (50, 50a, 50b) des einen der zwei Systeme zuzuführen ist, unter der Bedingung, dass eine Temperatur des Lenksystems nicht höher als eine eingestellte Temperatur ist, unter Berücksichtigung einer Erhöhung einer anzufordernden Lenkkraft.

5. Steer-by-Wire-Lenksystem nach Anspruch 4, wobei die Steuerung (62, 62a, 62b) konfiguriert ist, einen Betrag des Erhöhens des oberen Grenzwerts mit einer Verringerung der Temperatur des Lenksystems zu erhöhen.

6. Steer-by-Wire-Lenksystem nach Anspruch 4 oder 5, wobei die eingestellte Temperatur nicht höher als 0°C ist.

7. Steer-by-Wire-Lenksystem nach einem der Ansprüche 1 bis 6, wobei die Steuerung (62, 62a, 62b) den oberen Grenzwert nicht erhöht, wenn eine Geschwindigkeit des Fahrzeugs nicht höher als eine eingestellte Geschwindigkeit ist.

8. Steer-by-Wire-Lenksystem nach Anspruch 7, wobei die eingestellte Geschwindigkeit derart bestimmt wird, dass das Fahrzeug bei der eingestellten Geschwindigkeit als im Stillstand befindlich betrachtet wird.

9. Steer-by-Wire-Lenksystem nach einem der Ansprüche 1 bis 8,

   wobei in einem Fall, in dem das Rad (10) durch beide der zwei Systeme der Lenkvorrichtung (14, 14a, 14b) gelenkt wird, die Steuerung (62, 62a, 62b) den Strom bestimmt, der dem Elektromotor (50, 50a, 50b) eines der zwei Systeme zuzuführen ist, und den bestimmten Strom nicht nur dem Elektromotor (50, 50a, 50b) des einen der zwei Systeme, sondern auch dem Elektromotor (50, 50a, 50b) des anderen der zwei Systeme zuführt, und

wobei in einem Fall, in dem das Rad (10) nur durch das andere der zwei Systeme der Lenkvorrichtung (14, 14a, 14b) gelenkt wird, die Steuerung (62, 62a, 62b) den Strom bestimmt, der dem Elektromotor (50, 50a, 50b) des anderen der zwei Systeme zuzuführen ist, und den bestimmten Strom dem Elektromotor (50, 50a, 50b) des anderen der zwei Systeme zuführt.

## Revendications

1. Système de direction à commande électrique pour véhicule, comprenant :

   un élément d'actionnement (20) pouvant être actionné par un conducteur ;
   un dispositif de direction à double système (14, 14a, 14b) incluant deux systèmes dont chacun inclut un moteur électrique (50, 50a, 50b) en tant que source d'entraînement, le dispositif de direction (14, 14a, 14b) étant configuré pour diriger une roue (10) ; et
   un dispositif de commande (62, 62a, 62b) configuré pour commander un courant à apporter à chacun des moteurs électriques (50, 50a, 50b) des deux systèmes respectifs de manière à amener le dispositif de direction (14, 14a, 14b) à diriger la roue (10) conformément à un actionnement de l'élément d'actionnement (20),
   dans lequel le dispositif de commande (62, 62a, 62b) est configuré pour empêcher que le courant supérieur à une valeur limite supérieure soit apporté aux moteurs électriques (50, 50a, 50b) des deux systèmes respectifs,
   dans lequel, lorsque la roue (10) est dirigée par un seul des deux systèmes, le dispositif de commande (62, 62a, 62b) augmente la valeur limite supérieure du courant à apporter au moteur électrique (50, 50a, 50b) de l'un des deux systèmes, et
   dans lequel, lorsqu'une température du système de direction n'est pas supérieure à une température définie, le dispositif de commande (62, 62a, 62b) augmente une quantité d'élévation de la valeur limite supérieure en tenant compte d'une augmentation d'une force de direction à exiger.

2. Système de direction à commande électrique selon la revendication 1, dans lequel le dispositif de commande (62, 62a, 62b) est configuré pour augmenter la quantité d'élévation de la valeur limite supérieure avec une diminution de la température du système de direction.

3. Système de direction à commande électrique selon la revendication 1 ou 2, dans lequel la température réglée n'est pas supérieure à 0 °C.

4. Système de direction à commande électrique pour un véhicule, comprenant :

   un élément d'actionnement (20) pouvant être actionné par un conducteur ;
   un dispositif de direction à double système (14, 14a, 14b) incluant deux systèmes dont chacun inclut un moteur électrique (50, 50a, 50b) en tant que source d'entraînement, le dispositif de direction (14, 14a, 14b) étant configuré pour diriger une roue (10) ; et
   un dispositif de commande (62, 62a, 62b) configuré pour commander un courant à apporter à chacun des moteurs électriques (50, 50a, 50b) des deux systèmes respectifs de manière à amener le dispositif de direction (14, 14a, 14b) à diriger la roue (10) conformément à un actionnement de l'élément d'actionnement (20),
   dans lequel le dispositif de commande (62, 62a, 62b) est configuré pour empêcher que le courant supérieur à une valeur limite supérieure soit apporté aux moteurs électriques (50, 50a, 50b) des deux systèmes respectifs,
   dans lequel, lorsque la roue (10) est dirigée par un seul des deux systèmes, le dispositif de commande (62, 62a, 62b) augmente la valeur limite supérieure du courant à apporter au moteur électrique (50, 50a, 50b) de l'un des deux systèmes à condition qu'une température du système de direction ne soit pas supérieure à une température de consigne en tenant compte d'une augmentation d'une force de direction à exiger.

5. Système de direction à commande électrique selon la revendication 4, dans lequel le dispositif de commande (62, 62a, 62b) est configuré pour augmenter une quantité d'élévation de la valeur limite supérieure avec une diminution de la température du système de direction.

6. Système de direction à commande électrique selon la revendication 4 ou 5, dans lequel la température de consigne n'est pas supérieure à 0 °C.

7. Système de direction à commande électrique selon l'une quelconque des revendications 1-6, dans lequel le dispositif de commande (62, 62a, 62b) n'augmente pas la valeur limite supérieure lorsqu'une vitesse du véhicule n'est pas supérieure à une vitesse de consigne.

8. Système de direction à commande électrique selon la revendication 7, dans lequel la vitesse de consigne est déterminée de telle sorte que le véhicule soit considéré comme étant à l'arrêt à la vitesse de consigne.

9. Système de direction à commande électrique selon l'une quelconque des revendications 1-8,

dans lequel, dans un cas où la roue (10) est dirigée à la fois par les deux systèmes du dispositif de direction (14, 14a, 14b), le dispositif de commande (62, 62a, 62b) détermine le courant à apporter au moteur électrique (50, 50a, 50b) de l'un des deux systèmes et apporte le courant déterminé non seulement au moteur électrique (50, 50a, 50b) du un des deux systèmes mais également au moteur électrique (50, 50a, 50b) de l'autre des deux systèmes, et

dans lequel, dans un cas où la roue (10) est dirigée uniquement par l'autre des deux systèmes du dispositif de direction (14, 14a, 14b), le dispositif de commande (62, 62a, 62b) détermine le courant à apporter au moteur électrique (50, 50a, 50b) de l'autre des deux systèmes et apporte le courant déterminé au moteur électrique (50, 50a, 50b) de l'autre des deux systèmes.

# FIG.1

# FIG.2

# FIG.3

BASIC STEERING
PROGRAM

S1   OPERATION ANGLE $\delta$
IS OBTAINED

S2   TARGET STEERING
ANGLE $\theta^*$ IS DETERMINED
$\theta^* = R_G \times \delta$

S3   TARGET MOTOR ROTATION
ANGLE $\nu^*$ IS DETERMINED

S4   ACTUAL MOTOR ROTATION
ANGLE $\nu$ IS DETECTED

S5   MOTOR ROTATION ANGLE
DEVIATION $\Delta\nu$ IS DETERMINED
$\Delta\nu = \nu^* - \nu$

S6   STEERING TORQUE Tqs IS DETERMINED
$Tqs = G_P \times \Delta\nu + G_I \times \int \Delta\nu \, dt + G_D \times d\Delta\nu / dt$

S7   STEERING CURRENT Is
IS DETERMINED

S8   CURRENT
LIMITATION

S9   CURRENT IS SUPPLIED
TO STEERING MOTOR

S10   INFORMATION ON STEERING
CURRENT Is IS TRANSMITTED

END

DEPENDENT STEERING
PROGRAM

S11   STEERING CURRENT Is
IS RECEIVED

S12   CURRENT IS SUPPLIED
TO STEERING MOTOR

S13   INFORMATION ON STEERING
CURRENT Is IS TRANSMITTED

END

UPPER LIMIT VALUE
$I_{S-LIM}$

FIG.4A

$I_{S-N}$

$\Delta I_{S-LIM}$

0                    $T_H$

MOTOR TEMPERATURE $T_M$ (°C)

BOARD TEMPERATURE $T_D$ (°C)

STEERING TORQUE
$Tq_S$

FIG.4B

$Tq_{S-LIM}{}'$

$Tq_{S-LIM}$

ROTATIONAL SPEED $N$

FIG.5A

STEERING FORCE

0
ENVIRONMENTAL TEMPERATURE $T_A$ (°C)

FIG.5B

UPPER LIMIT VALUE
$I_{S-LIM}$

$\Delta I_{S-LIM}$

$\Delta I_{S-LIM}$

$\Delta I_{S-LIM}$

$I_{S-N}$

$T_L$    0
ENVIRONMENTAL TEMPERATURE $T_A$ (°C)

19

## FIG.6

```
              CURRENT LIMITATION SUBROUTINE

S21      MOTOR TEMPERATURE Tₘ,
         BOARD TEMPERATURE Tᴅ, AND
         ENVIRONMENTAL TEMPERATURE Tₐ
         ARE OBTAINED

S22      VEHICLE SPEED v
         IS OBTAINED

S23         ANOTHER SYSTEM
NO          IS IN FAILURE?
                           YES

S25
YES         v ≤ vᴛʜ  ?
                      NO

S26      TEMPERATURE-DEPENDENT          NO
         RAISING MODE?
                      YES

S28
NO          Tₐ ≤ Tʟ  ?
                      YES
```

$$v \leq v_{TH} \ ?$$

$$T_A \leq T_L \ ?$$

| S24 | S29 | S27 |
|---|---|---|
| UPPER LIMIT VALUE Is-ʟɪᴍ IS DETERMINED REFERRING TO CURRENT LIMITATION MAP FOR HIGH-TEMPERATURE STATE (SOLID LINE) AND CURRENT LIMITATION MAP FOR LOW-TEMPERATURE STATE (SOLID LINE) | UPPER LIMIT VALUE Is-ʟɪᴍ IS DETERMINED REFERRING TO CURRENT LIMITATION MAP FOR HIGH-TEMPERATURE STATE (SOLID LINE) AND CURRENT LIMITATION MAP FOR LOW-TEMPERATURE STATE (LONG DASHED SHORT DASHED LINE) | UPPER LIMIT VALUE Is-ʟɪᴍ IS DETERMINED REFERRING TO CURRENT LIMITATION MAP FOR HIGH-TEMPERATURE STATE (DASHED LINE) AND CURRENT LIMITATION MAP FOR LOW-TEMPERATURE STATE (DASHED LINE) |

```
S30      STEERING CURRENT Is > Is-ʟɪᴍ  ?     NO
                          YES

S31           Is = Is-ʟɪᴍ

                    END
```

# FIG.7

```
        ╭─────────────────────╮
        │   REACTION FORCE     │
        │ APPLICATION PROGRAM  │
        ╰─────────────────────╯
                 │
  S41  ┌─────────────────────┐
       │ STEERING CURRENT Is  │
       │     IS OBTAINED      │
       └─────────────────────┘
                 │
  S42  ┌─────────────────────────┐
       │ STEERING-LOAD-DEPENDENT  │
       │ COMPONENT Fs IS DETERMINED│
       └─────────────────────────┘
                 │
  S43  ┌─────────────────────┐
       │ OPERATION TORQUE Tqo │
       │     IS DETECTED      │
       └─────────────────────┘
                 │
  S44  ┌──────────────────────────┐
       │ OPERATION-FORCE-DEPENDENT │
       │  REDUCTION COMPONENT FA   │
       │       IS DETERMINED       │
       └──────────────────────────┘
                 │
  S45  ┌─────────────────────────┐
       │   OPERATION REACTION     │
       │ FORCE FCT IS DETERMINED  │
       │      FCT = Fs - FA       │
       └─────────────────────────┘
                 │
  S46  ┌─────────────────────────┐
       │    REACTION FORCE        │
       │ CURRENT Ic IS DETERMINED │
       └─────────────────────────┘
                 │
  S47  ┌─────────────────────────┐
       │ CURRENT IS SUPPLIED TO   │
       │ REACTION FORCE MOTOR     │
       └─────────────────────────┘
                 │
            ╭──────────╮
            │   END    │
            ╰──────────╯
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018130007 A

- WO 2019219329 A1